# EUROPEAN PATENT APPLICATION

(11) **EP 4 763 562 A1**
(43) Date of publication of application: **24.06.2026**
(21) Application number: 25218400.7
(22) Date of filing: 25.11.2025
(51) Int. Cl.: B60K 1/04, B60K 1/00, H01M 50/242

(54) **IMPACT GUARD FOR A MOTOR VEHICLE CHASSIS AND A MOTOR VEHICLE**

(30) Priority: 17.12.2024 FI 20246480
(71) Applicant: EV Guard Oy, 67600 Kokkola (FI)
(72) Inventor: RAHKONEN, Jan-Erik, 67900 Kokkola (FI)
(74) Representative: Berggren Oy

(57) **Abstract**

A guard removably attachable to the chassis of a motor vehicle, wherein the chassis comprises a traction battery (10) and at least one component directly or indirectly connected to the traction battery and affecting to the operation or use of the traction battery, is dimensioned to cover the said traction battery and additionally said at least one component directly or indirectly connected to said traction battery as viewed from the direction of the travel surface of the motor vehicle.

## Description

### Field of the Invention

The invention relates to a guard removably attachable to the chassis of a motor vehicle, wherein the chassis comprises a traction battery and at least one component directly or indirectly connected to the traction battery and affecting to the operation or use of the traction battery. The invention further relates to a motor vehicle comprising a guard according to the invention.

### Background Art

The traction battery of electric and hybrid vehicles is typically positioned in the bottom of the vehicle, below the vehicle body, such that the base plate of the traction battery faces the travel surface, typically towards the road surface. A traction battery located in the bottom of the vehicle is exposed to stones rebounding from the travel surface and to irregularities in the surface, which may cause deep scratches and/or dents in the base plate of the traction battery, potentially damaging the battery cells inside. Damage to the battery cells can result in functional disturbances of the battery and/or, in the worst case, complete destruction of the battery. The condition of the battery base plate is assessed visually, e.g., during scheduled maintenance or inspection of the vehicle. Even relatively minor damage to the surface of the base plate may result in the loss of the battery warranty, necessitate battery replacement, or lead to rejection of the vehicle during inspection.

From document US 9862427 B2, a motor vehicle chassis is known which comprises a base plate and a guard attached to the lower surface of the base plate. The base plate may be the floor plate of the vehicle body or the base plate of the traction battery of an electric or hybrid vehicle. The guard may be laminated to the base plate or attached to the base plate with mechanical fasteners.

From document US 2022/0037731 A1, an electric vehicle traction battery is known, the lower surface of which is provided with a protective plate fixed to the battery.

From document DE 102023124896 A1, a base plate attachable to the bottom of a motor vehicle is known, which can be installed either in an internal combustion engine vehicle or an electric vehicle. In electric vehicles, the base plate is dimensioned to protect only the traction battery.

A weakness of known guards is that their removal from the base plate of the traction battery is difficult or even impossible. However, removal of the guards is necessary, for example, during maintenance or inspection, in order to ensure that the base plate of the traction battery covered by the guard is undamaged. Known guards protecting the traction battery are also dimensioned so that they protect only the traction battery, leaving other components located in the vehicle floor that are directly or indirectly connected to the traction battery and affecting to the operation or use of the traction battery , such as electric motor(s), high-voltage and low-voltage cables and their connectors, as well as the traction battery's cooling/heating fluid pipes and their connectors, unprotected.

The object of the invention is to provide a guard for a motor vehicle chassis and a motor vehicle, by which the problems associated with the prior art can be eliminated. The objects of the invention are achieved by the guard and motor vehicle characterized by what is set forth in the independent claims. Certain advantageous embodiments of the invention are set forth in the dependent claims.

### Brief Summary of the Invention

The invention relates to a guard removably attachable to the chassis of a motor vehicle, wherein the chassis has a traction battery and at least one component directly or indirectly connected to the traction battery and affecting to the operation or use of the traction battery. The guard is dimensioned to cover the aforementioned traction battery and additionally the at least one component directly or indirectly connected to the traction battery as viewed from the direction of the vehicle travel surface.

In some embodiments of the guard according to the invention, the traction battery comprises a base plate facing the vehicle travel surface, having a surface area, and the guard is a unitary plate-like member having a surface area greater than the surface area of the base plate. The surface areas refer to areas parallel to the chassis of the motor vehicle.

In some embodiments of the guard according to the invention, the guard comprises an upper surface facing the traction battery, which is provided with an impact force distribution element. Preferably, the impact force distribution element is a plate-like member extending at least over the region defined by the base plate of the traction battery. The function of the distribution element is to distribute a point force applied to the guard over a larger area of the base plate, thereby reducing the risk of local deformations in the base plate.

In some embodiments, the impact force distribution element extends over the area of the at least one component directly or indirectly connected to the traction battery and affecting to the operation or use of the traction battery.

In some embodiments, the impact force distribution element comprises thermally insulating material. In this case, the impact force distribution element also serves as a thermal insulator for the traction battery.

In some embodiments, the guard is provided with fastening means by which the guard can be removably attached to the chassis of the motor vehicle. The guard is therefore not attached directly to the traction battery, but to the chassis.

In some embodiments, the fastening means comprise a set of first fasteners configured to attach to the chassis when the guard is in a predetermined locking position relative to the chassis and to detach from the chassis when the guard is in a position deviating from the locking position, and at least one second fastener for immobilizing the guard in the locking position. Preferably, the at least one second fastener can be brought into an inspection position in which the second fastener is loosely attached to the chassis, allowing the guard to be moved in the plane of the chassis to the locking position and to a position deviating from the locking position.

In some embodiments, the guard is made of metal, plastic, composite material, or a combination thereof.

The motor vehicle according to the invention comprises a chassis, wherein the chassis comprises a traction battery and at least one component directly or indirectly connected to the traction battery and affecting to the operation or use of the traction battery, as well as a guard removably attached to the chassis, which covers the traction battery as viewed from the direction of the vehicle travel surface. The guard also covers the at least one component directly or indirectly connected to the traction.

In some embodiments of the motor vehicle according to the invention, the at least one component in the chassis directly or indirectly connected to the traction battery comprises an electric motor driving at least one wheel of the motor vehicle.

In some embodiments of the motor vehicle according to the invention, the at least one component in the chassis directly or indirectly connected to the traction battery comprises high-voltage cables and/or their connectors.

In some embodiments of the motor vehicle according to the invention, the at least one component in the chassis directly or indirectly associated with the traction battery comprises cooling/heating fluid pipes and/or their connectors.

In some embodiments of the motor vehicle according to the invention, the guard is a guard for a motor vehicle chassis according to the invention as described above.

An advantage of the invention is that it significantly reduces the risk of damage to the traction battery of electric or hybrid vehicles, which is economically beneficial to both owners of electric or hybrid vehicles and insurance companies.

A further advantage of the invention is that it improves the operational safety of electric or hybrid vehicles, since the risk of fires caused by damage to the traction battery is reduced.

### Brief Description of the Drawings

The invention will be described in detail below. The description refers to the accompanying drawings, in which
Figure 1 shows, by way of example, a cross-sectional view of a motor vehicle according to the invention,
Figure 2 shows, by way of example, a guard according to the invention and the parts of the motor vehicle protected by it, viewed obliquely from above, and
Figure 3a shows, by way of example, a preferred embodiment of a guard according to the invention viewed from above, and
Figures 3b and 3c show, by way of example, a guard installed on a motor vehicle chassis viewed from the side.

### Detailed Description of the Invention

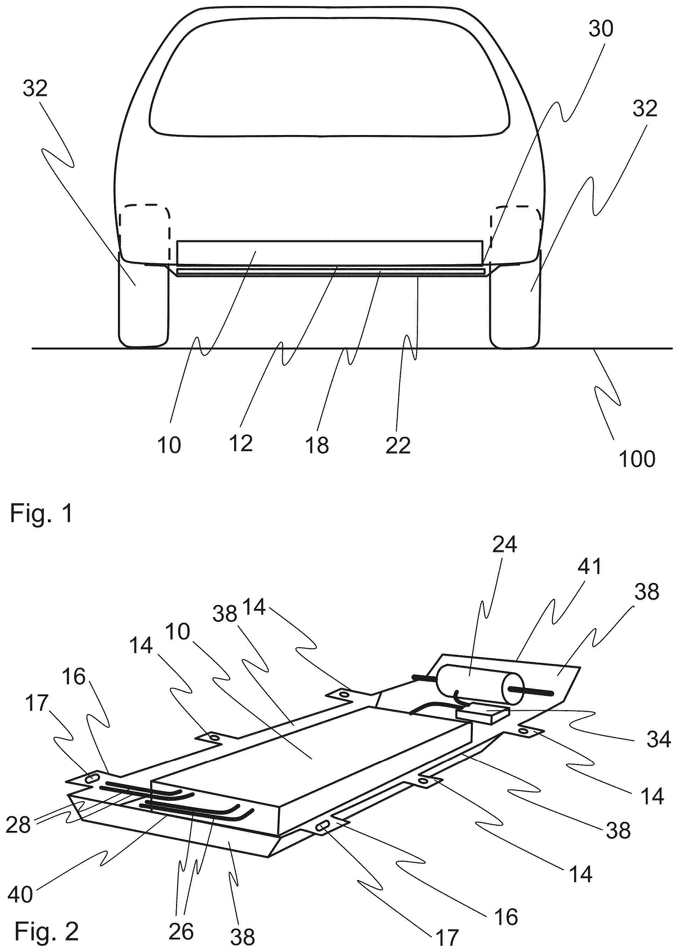

Figure 1 shows, by way of example, a cross-sectional view of a motor vehicle according to the invention equipped with a chassis guard according to the invention.

The cross-section is taken in the transverse direction of the motor vehicle between the front and rear wheels.

The motor vehicle shown in Figure 1 is equipped with at least one electric motor 24 (Figure 2) for driving at least one wheel 32 and a traction battery 10 for storing the electrical energy required by the electric motor. The motor vehicle may be an electric vehicle without an internal combustion engine or a so-called hybrid vehicle equipped with both an internal combustion engine and an electric motor. The traction battery is positioned in the bottom of the vehicle body, i.e., in the chassis 30, so that the base plate 12 of the traction battery is close to the vehicle travel surface 100, which is typically the road surface. The chassis guard according to the invention is attached to the chassis so that it is positioned on the surface of the base plate of the traction battery facing the vehicle travel surface. The guard may be made of metal, plastic, composite material, or a combination thereof. Preferably, the guard is made of aluminum. On the upper surface 22 of the guard, between the guard and the base plate, there is an impact force distribution element 18, the function of which is to distribute impacts applied to the lower surface of the guard over a larger area of the base plate. The impact force distribution element may be substantially a rigid plate-like member or a slightly flexible mat-like member with a thickness of 5-15 mm. There may be a gap between the upper surface of the impact force distribution element and the base plate 12, or the distribution element may be pressed tightly against the base plate. The impact force distribution element may be made wholly or partly of thermally insulating material. The material of the distribution element may comprise, for example, neoprene, polyurethane, or preferably thermoplastic PET foam. Preferably, the distribution element is attached to the upper surface of the guard and dimensioned and shaped so that it covers the base plate 12 of the traction battery substantially completely as viewed from the direction of the travel surface 100.

Figure 2 shows, by way of example, a chassis guard for a motor vehicle according to the invention, viewed obliquely from above. Also shown in the figure are the traction battery 10 locating in the chassis of the motor vehicle and components directly or indirectly connected to the traction battery and affecting to the operation or use of the traction battery. For clarity, these parts are shown detached from the vehicle.

In addition to the traction battery 10, the chassis of an electric or hybrid vehicle typically comprises high-voltage cables 26, by which the traction battery is connected either directly or via a transformer 34 to the vehicle's charging socket (not shown in the figure). The chassis also comprises at least one electric motor 24, which is connected by cables to the traction battery either directly or via a transformer. The electric motor is connected by a power transmission mechanism (not shown) to at least one wheel of the vehicle. Depending on the structure of the traction battery, it may have a liquid-circulation heating/cooling system, in which case it is further connected to heating/cooling fluid pipes 28. These components and their connectors are typically located at least partly outside the area defined by the base plate of the traction battery. The chassis guard according to the invention is dimensioned so that, when installed in place on the chassis, it covers, in addition to the traction battery, at least one of the aforementioned components directly or indirectly connected to the traction battery and affecting to the operation or use of the traction battery, as viewed from the direction of the vehicle travel surface. Preferably, it covers substantially all of the aforementioned components.

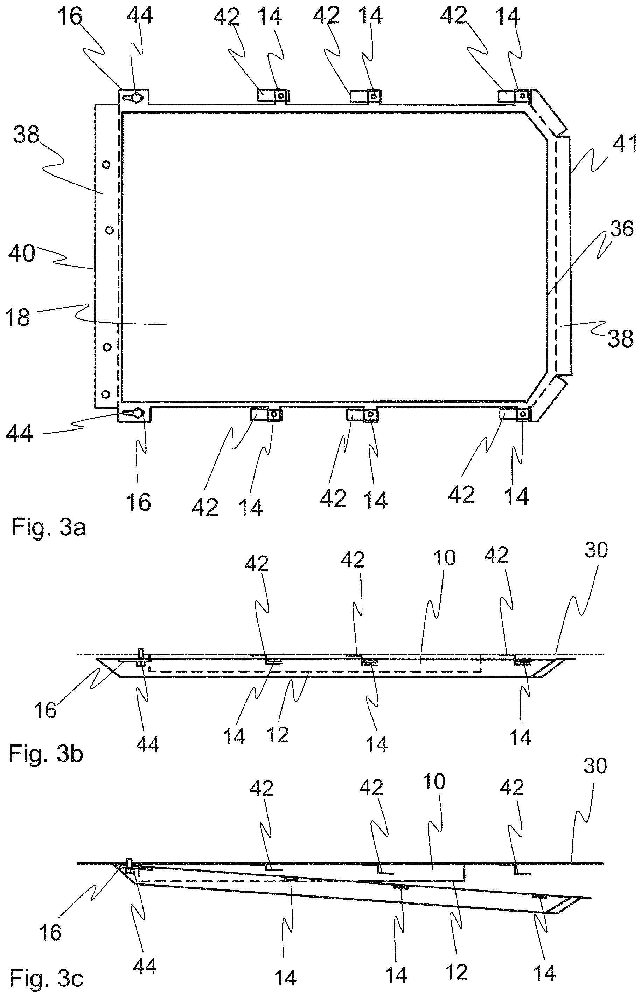

The guard is shaped as a plate-like, unitary member having a substantially flat base portion 36 (Figures 3a, 3b) and edge portions 38 bent upwards from the plane of the base portion, i.e., towards the vehicle chassis. Preferably, there are edge portions bent towards the chassis at least at both ends of the guard, but they may also be present on the long sides of the guard. The dimensions of the base portion and edge portions, and the distance of the free edge of the edge portions from the plane of the base portion, are selected case by case based on the structure of the vehicle chassis and the dimensions and arrangement of the traction battery and components directly or indirectly connected therewith installed in the chassis. On the longitudinal edges of the guard are first fasteners 14 and second fasteners 16, by which the guard is removably attached to the chassis of the motor vehicle. The first and second fasteners are plate-like projections extending laterally from the longitudinal edges of the guard. The second fasteners 16, closest to the rear edge 40 of the guard, are provided with an elongated slot 17 in the longitudinal direction of the guard. The first fasteners 14, closer to the front edge 41 of the guard, may have a hole or may be without holes. The operation of the first and second fasteners is explained in more detail in connection with the description of Figures 3a and 3b.

Figure 3a shows, by way of example, a preferred embodiment of a chassis guard for a motor vehicle according to the invention, viewed from above. In this embodiment, there is a substantially flat base portion 36 and edge portions 38 bent upwards from the plane of the base portion at the front edge 41 and rear edge 40 of the guard. A plate-like, substantially uniform-thickness impact force distribution element 18 extends substantially over the entire area of the base portion. On each long side of the guard, there are three first fasteners 14 and one second fastener 16 as described in connection with Figure 2. The second fasteners are located near the rear edge 40 of the guard. The guard may also be implemented with a single second fastener, in which case it is appropriate to position it substantially at the midpoint of the rear edge. Figure 3a also shows support members 42 to be arranged on the vehicle chassis, to which the first fasteners are attached, and a locking bolt 44, by which the second fasteners are attached to the chassis as described below.

Figures 3b and 3c show, by way of example, a preferred embodiment of the chassis guard of Figure 3a, viewed from the side. The chassis of the motor vehicle is provided with shaped plate-like support members 42 such that a gap is left between the end of the support member remote from the chassis and the chassis 30, into which the first fastener 14 can be fitted. Support members are arranged on the chassis so that their arrangement and number correspond to the arrangement and number of the first fasteners on the guard. For attaching the second fasteners 16, the chassis is provided with two threaded locking holes, the arrangement of which corresponds to the position of the elongated slots 17 of the second fasteners.

The guard is attached to the chassis by moving the guard in the direction of the chassis to a predetermined locking position, in which each first fastener 14 is positioned in the gap between the corresponding support member 42 and the chassis 30. The locking bolts 44 are then tightly screwed into the locking holes through the slots 17 of the second fasteners, whereby the guard is immovably attached to the chassis at the rear (Figure 3b). The guard is thus held in place at a constant height from the chassis by the suspension attachment formed by the first fasteners and support members and the locking bolts. The mutual position of the locking holes and support members is selected so that, when the guard is in the locking position, the locking bolts are at the first end of the elongated slots of the second fasteners.

For visual inspection of the condition of the base plate 12 of the traction battery 10, the locking bolts 44 can be loosened slightly so that the heads of the locking bolts still support the guard but allow the guard to be moved in the direction of the chassis to a position in which the locking bolts are at the second end of the elongated slots 17. In this position, deviating from the locking position, the first locking elements have moved completely out of the gap between the support members 42 and the chassis 30, allowing the front edge of the guard to drop downward, which enables visual inspection of the condition of the base plate of the traction battery (Figure 3c), for example, during vehicle inspection or maintenance. After inspection, the guard can be easily returned to the locking position and locked immovably in place by tightening the locking bolts.

The first and second fasteners, support members, and locking bolts described above are merely a preferred way of removably attaching the guard to the chassis. The attachment method is very quick, and thus can be considered a quick-attachment method. The removable quick-attachment of the guard can also be implemented in other ways, such as with locking pins arranged on the chassis and locking clips engaging the locking pins.

Some advantageous embodiments of the chassis guard and motor vehicle according to the invention have been described above. The invention is not limited to the solutions described above, but the inventive concept can be applied in various ways within the limits set by the claims.

### Reference numeral list:

- 10: traction battery
- 12: base plate
- 14: first fastener
- 16: second fastener
- 17: hole
- 18: impact force distribution element
- 22: upper surface
- 24: electric motor
- 26: high-voltage cable
- 28: cooling/heating fluid pipe
- 30: chassis
- 32: wheel
- 34: transformer
- 36: base portion
- 38: edge portion
- 40: rear edge
- 41: front edge
- 42: support member
- 44: locking bolt
- 100: travel surface

## Claims

1. A guard removably attachable to the chassis (30) of a motor vehicle, wherein the chassis (30) comprises a traction battery (10) and at least one component directly or indirectly connected to the traction battery (10) and affecting to the operation or use of the traction battery (10), the guard being dimensioned to cover the said traction battery (10) as viewed from the direction of the travel surface (100) of the motor vehicle, **characterized in that** said guard is dimensioned to also cover said at least one component directly or indirectly connected to the traction battery (10).

2. . The guard according to claim 1, **characterized in that** the traction battery (10) comprises a base plate (12) facing the travel surface of the motor vehicle, having a surface area, and the said guard is a unitary plate-like member having a surface area greater than the surface area of the said base plate (12).

3. . The guard according to claim 2, **characterized in that** the said guard comprises an upper surface (22) facing the traction battery (10), which is provided with an impact force distribution element (18).

4. . The guard according to claim 3, **characterized in that** the said impact force distribution element (18) is a plate-like member extending at least over the area defined by the base plate (12) of the traction battery (10).

5. . The guard according to claim 3 or 4, **characterized in that** the said impact force distribution element (18) extends at least over the area of the at least one component directly or indirectly connected to the traction battery (10) and affecting to the operation or use of the traction battery (10).

6. . The guard according to any one of claims 3-5, **characterized in that** the said impact force distribution element (18) comprises thermally insulating material.

7. . The guard according to any one of claims 1-6, **characterized in that** the said guard is provided with fastening means by which the guard can be removably attached to the chassis (30) of the motor vehicle.

8. . The guard according to claim 7, **characterized in that** the said fastening means comprise a set of first fasteners (14) configured to attach to the chassis (30) when the guard is in a predetermined locking position relative to the chassis (30) and to detach from the chassis (30) when the guard is in a position deviating from the said locking position, and at least one second fastener (16) for immobilizing said guard in said locking position.

9. . The guard according to claim 8, **characterized in that** the said at least one second fastener (16) can be brought into an inspection position in which the second fastener (16) is loosely attached to the chassis (30), whereby the said guard can be moved in the plane of the chassis (30) to the said locking position and to a position deviating from the locking position.

10. . The guard according to any one of claims 1-9, **characterized in that** it is made of metal, plastic, composite material, or a combination thereof.

11. . A motor vehicle comprising a chassis (30), wherein the chassis (30) comprises a traction battery (10) and at least one component directly or indirectly connected to the traction battery (10) and affecting to the operation or use of the traction battery (10), as well as a guard removably attached to the chassis, which covers the said traction battery (10) as viewed from the direction of the travel surface (100) of the motor vehicle, **characterized in that** the said guard also covers said at least one component directly or indirectly connected to the traction battery (10).

12. . The motor vehicle according to claim 11, **characterized in that** the at least one component in the chassis (30) directly or indirectly connected to the traction battery (10) comprises at least one electric motor (24) driving a wheel of the motor vehicle.

13. . The motor vehicle according to claim 11 or 12, **characterized in that** the at least one component in the chassis (30) directly or indirectly connected to the traction battery (10) comprises high-voltage cables (26) and/or their connectors.

14. . The motor vehicle according to any one of claims 11-13, **characterized in that** the at least one component in the chassis (30) directly or indirectly connected to the traction battery (10) comprises cooling/heating fluid pipes (28) and/or their connectors.

15. . The motor vehicle according to any one of claims 11-14, **characterized in that** the said guard is a guard for a motor vehicle chassis according to any one of claims 1-10.
